Europäisches Patentamt

(19) European Patent Office

Office européen des brevets

(11) Publication number: **0 014 574**
**B1**

(12) **EUROPEAN PATENT SPECIFICATION**

(45) Date of publication of patent specification: **18.05.83**

(51) Int. Cl.³: **C 08 F  291/02,**
C 08 L  25/06, C 08 L  51/04
//(C08F291/02, 220/14)

(21) Application number: **80300305.2**

(22) Date of filing: **01.02.80**

(54) Process for the production of graft polymer, the polymer so produced and polystyrene compositions containing it as an impact modifier.

(30) Priority: **08.02.79 US  10356**

(43) Date of publication of application:
**20.08.80 Bulletin 80/17**

(45) Publication of the grant of the patent:
**18.05.83 Bulletin 83/20**

(84) Designated Contracting States:
**DE FR GB IT**

(56) References cited:
**FR - A - 1 545 586**
**GB - A - 1 092 844**
**GB - A - 1 489 263**
**US - A - 3 178 489**
**US - A - 3 300 545**
**US - A - 3 900 453**
**US - A - 3 981 944**
**US - A - 4 080 406**

(73) Proprietor: **Rohm and Haas Company**
**Independence Mall West**
**Philadelphia, Pennsylvania 19105 (US)**

(72) Inventor: **Purvis, Marshall Treservance**
**449 Merion Drive**
**Newtown, Pa 18940 (US)**

(74) Representative: **Angell, David Whilton et al,**
**Rohm and Haas Company Patent Department**
**Chesterfield House Bloomsbury Way**
**London WC1A 2TP (GB)**

(56) References cited:
**CHEMICAL ABSTRACTS, vol. 83, 1975, page**
**30, no. 44181c Columbus, Ohio, U.S.A.**
**CHEMICAL ABSTRACTS, vol. 76, no. 18, 1st**
**May 1972, page 39, no. 100605p Columbus,**
**Ohio, U.S.A.**

Courier Press, Leamington Spa, England.

Process for the production of graft polymer, the polymer so produced and polystyrene compositions
containing it as an impact modifier

This invention is concerned with a process for the production of graft polymer, the polymer so produced and polystyrene compositions containing it as an impact modifier. The field to which the invention relates is the graft polymerization of synthetic rubber and methyl methacrylate polymers and copolymers to make polymers useful as impact modifiers, particularly for polystyrene.

In impact modification of polystyrene, it is well known to copolymerise alkyl methacrylate with styrene in the presence of synthetic rubbers such as butadiene-styrene copolymers, to make an impact modifier. U.S. Patent 2,941,977 discloses a homogeneous and inseparable dispersion of the copolymer ingredients with one another. U.S. Patent 3,267,178 discloses graft polymers prepared by dissolving or dispersing rubbery butadiene polymer in monomers, heating first in mass while agitating to partially polymerize the monomers, then suspending the partially polymerized liquid in an inert aqueous medium at elevated temperatures to polymerize the remaining monomers.

U.S. Patent 3,178,489 discloses a bulk or mass polymerization of styrene-methyl methacrylate copolymer in certain ratios in the presence of dissolved styrene/butadiene copolymer in two or three successive stages. British Patent 1,489,263 shows polymerization of styrene by mass polymerization in the presence of dissolved synthetic rubber in three successive zones in a devolatilizing extruder to produce high impact polystyrene. U.S. Patent 4,080,406 shows polymerization of vinyl aromatic monomer and methyl or ethyl methacrylate in the presence of a synthetic rubber by different processes, one of which is a continuous or partially continuous process wherein solution is continuously introduced and removed from a stirred reactor at a constant 30—50% solids content; followed by completion of the polymerization at higher temperatures for several hours in a second stage. U.S. Patent 3,900,453 teaches polymerization of methacrylates continuously in a stirred reactor at temperatures above 130°C and below 160°C. The monomer feed contains mercaptan as well as free radical initiator. Among the modifier materials are polymers such as polystyrene and synthetic rubbers "incorporated in the polymerization or volatile removing steps, or after the volatile removing step. In most cases," the patent teaches, "it is preferred to incorporate these additives after the polymerization step".

In the process of the present invention a solution of synthetic rubber in monomer containing methyl methacrylate is continuously introduced into a reactor, continuously stirred therein, subjected to polymerization conditions at 161 to 195°C and after an average residence time of 1 to 90 minutes removed from the reactor as graft polymer. The process is carried out as a single stage polymerization process in a single reactor. Preferably the pressure in the reactor is from 0.689 to 1.21 MNm$^{-2}$ (100 to 175 psi) gauge. The removed graft polymer comprises dispersed rubber phase and continuous methyl methacrylate-containing phase. The invention also extends to the polymer made by this process and has a highly desirable combination of impact strength, clarity, rigidity, and melt flow properties. Furthermore the process is highly efficient in the production of graft polymers of methyl methacrylate homopolymer or copolymer onto synthetic rubber.

The monomer system is comprised of methyl methacrylate, preferably in an amount of 60 to 100% by weight. Styrene is optionally present, preferably in an amount of one to 40% by weight. The presence of styrene is preferred because of its solvating properties. The preferred monomer systems consist of 1 to 40% styrene, the balance being methyl methacrylate. Other additional comonomers, which may be present in amounts of 0 to 10% by weight each, include acrylonitrile, alpha-methyl styrene, ethyl acrylate, butyl acrylate, and methyl acrylate. If transparency is desired in the final product, comonomers are chosen so as to produce a refractive index of the methyl methacrylate copolymer to match that of the synthetic rubber.

The synthetic rubber can be, for example, polybutadiene, butadiene-styrene copolymers, butadiene-acrylonitrile copolymers, ethylene-propylene diene copolymers and isoprene polymers and copolymers. The synthetic rubber should have residual unsaturation or other sites which can be employed for free radical grafting. The preferred synthetic rubbers are polybutadiene and butadiene-styrene copolymers containing 50% or less styrene.

The synthetic rubber is dissolved in the monomer system which acts as a reactive solvent. It is optional to have additional inert solvent such as xylene, toluene, or benzene. Such inert solvents may also act as polymerization controlling agents and mild chain transfer agents during polymerization. Up to 25% of the feed can be one or more of said inert solvents, but preferably the upper limit of such solvents is about 20% by weight of the feed.

About 30 to 300 ppm based on reactive monomer of organic peroxide or azo initiator may be added to the solution. Preferably about 1.0×10$^{-4}$ to 10$^{-5}$ moles of initiator per mole of monomer is employed. Suitable initiators are benzoyl peroxide, methyl ethyl ketone peroxide, dicumyl peroxide, 2,5-dimethyl-2,5-di(t-butyl peroxy)hexane, di-t-butyl peroxide, 2,5-dimethyl-2,5-di-(t-butyl peroxy)hexane-3, t-butyl hydroperoxide, 3,6,6,9,9-pentamethyl-3-n-butyl-1,2,4,5-tetraoxy cyclononane, di-t-butyl perbenzoate, t-butyl peroxyisopropylcarbonate, and azobisisobutanol diacetate. The solution can optionally also contain mercaptan as a chain transfer agent.

The residence time in the reactor should be at least one minute. If the average residence time substantially exceeds 90 minutes, the impact strength of the resultant products is significantly diminished. The use of lower residence times is also economically advantageous. As mentioned, the reactor is continuously stirred, advantageously to create turbulent flow, preferably at a rate of about 1,000 to 2,000 rpm, to create a turbulent mass flow with Reynold's values to exceed 2,100. The preferred temperature for the reaction is 165 to 180°C.

When the reaction is conducted in the absence of an inert solvent, the continuously removed product is polymerized to a monomer conversion which is preferably about 30 to 60%, whereas in the case where the polymerization is conducted in presence of an insert solvent, the continuously removed product is preferably polymerized to about 40 to 90% monomer conversion.

The product is usually devolatilised to remove inert solvent and/or unreacted monomer, to yield a graft polymer product with a highly desirable combination of properties. Without intending to be limited by any theoretical considerations, we believe that the product advantages result from the controlled degree of grafting of the rubber and hard phases, and vulcanization of the rubber phase, resulting from efficient mixing and uniform temperature during the entire polymerization in a single stage. It appears that the morphology of the polymer may be controlled to give a glassy continuum containing a narrow distribution of small rubber particles which in turn favourably influences surface gloss and clarity, impact resistance, rigidity, and low melt viscosity. To achieve this control and to achieve such excellent properties, it is necessary that the synthetic rubber be introduced as a solution.

Lubricants, thermal and UV stabilizers, colorants, and other desirable additives can be added either to the solution or during the process.

The following examples illustrate a few preferred embodiments of the invention. All parts and percentages throughout this disclosure are by weight unless otherwise indicated.

Examples

In the following experiments, polymerization of the reaction mixture was conducted under continuous conditions in a single stage reaction process with temperature of 161—195°C, with residence time below 90 min., and achievement of 25—65% monomer conversion to polymer. The reactor vessel had a 6.4 l (1.7 gal.) volume capacity and was fitted with a multi-bladed turbine agitator, operated at 1000—2000 rpm to achieve turbent mass flow with Reynold's values to exceed 2100. The reaction was operated at 0.689 to 1.21 MNm$^{-2}$ (100—175 psi) gauge.

"Steady state" polymerization conditions were achieved within five full reactor volumes from start-up. Start-up was accomplished by filling the 6.4 l (1.7 gal.) stainless steel reaction vessel with the reaction mixture, pressurizing the reactor and contents to 689476 to 1206583 Nm$^{-2}$ (100—175 psi) gauge, commencing agitation, increasing temperature to target conditions with the aid of external electrical heaters, and then continually delivering reaction mixture to the vessel at a finite rate while continually removing the partially polymerized reaction mixture from the vessel at an identical rate. Temperature of the reactor contents was monitored from thermocouples positioned at the top, middle, and bottom of the vessel.

Removal of residual volatiles, inert solvent or unreacted monomer, was accomplished above 150°C by devolatilization. Total residual volatiles in the final polymer should not exceed 1.0%.

Physical properties of these materials were determined on molded specimens under the following procedures:

| Property | ASTM procedure |
| --- | --- |
| Izod notched impact strength (0.32 cm (0.125") thickness specimens) | D-256 |
| Flexural strength | D-790 |
| Haze (determined on 0.32 cm (0.125") thickness specimens) | D-1003 |
| Deflection temperature under load (DTUL) | D-648 |
| Melt flow rate (F or I) | D-1238 |

Example 1

A solution comprising 3.31 kg (7.3 lbs.) polybutadiene rubber, 30.62 kg (67.5 lbs.) methyl methacrylate monomer, 8.16 kg (18.0 lbs.) styrene monomer, 2.04 kg (4.5 lbs.) acrylonitrile monomer, 4.54 kg (10.0 lbs.) toluene, and 4.90 gms peroxide initiator was continuously polymerized at 165°C, 30 min. residence time, 1.21 MNm$^{-2}$ (175 psi) gauge. Monomer conversion to polymer rate of 32.0% was observed. Devolatilized material exhibited the following performance:

Izod Notched Impact,
    23°C.=0.2 m.kg/cm (3.9 ft-lbs./in.) notch.

Example 2

A solution comprising 3.49 kg (7.705 lbs.) polybutadiene rubber, 31.15 kg (68.670 lbs.) methyl methacrylate monomer, 7.79 kg (17.170 lbs.) styrene monomer, 9.73 kg (21.460 lbs.) xylene, and 5.84 gms peroxide initiator was continuously polymerized at 175°C, 30 min. residence time, 1.21 NMm$^{-2}$ (175 psi) gauge. Monomer conversion to polymer rate of 35.9% was observed. Devolatilized material exhibited the following performance:

Izod Notched Impact,
    23°C.=0.21 m.kg/cm (4.1 ft-lbs./in.) notch.
Flexural Modulus of Elasticity,
    23°C=1.85 GNm$^{-2}$ (268,770 psi).

Example 3

A solution comprising 3.87 kg (8.522 lbs.) poly (butadiene/styrene) (80/20) rubber, 25.11 kg (55.369 lbs.) methyl methacrylate monomer, 13.52 kg (29.814 lbs.) styrene monomer, 9.66 kg (21.296 lbs.) xylene, and 5.80 gms peroxide initiator was continuously polymerized at 175°C, 30 min. residence time, 1.21 MNm$^{-2}$ (175 psi) gauge. Monomer conversion to polymer rate of 37.3% was observed. Devolatilized material exhibited the following performance:

Izod Notched Impact,
    23°C.=0.26 m.kg/cm (5.2 ft-lbs./in.) notch.
    0°C.=0.13 m.kg/cm (2.5 ft-lbs./in.) notch.
    −40°C=0.08 m.kg/cm (1.5 ft-lbs./in.) notch.
Flexural modulus of Elasticity,
    23°C=1.85 GNm$^{-2}$ (268,640 psi)
DTUL,
    1.8 MNm$^{-2}$ (264 psi)=79°C.

Example 4

A solution comprising 3.49 kg (7.705 lbs.) polybutadiene rubber, 31.15 kg (68.670 lbs.) methyl methacrylate monomer, 7.79 kg (17.170 lbs.) styrene monomer, 9.73 kg (21.460 lbs.) xylene, and 5.96 gms di-t-butyl peroxide initiator was continuously polymerized at 175°C, 30 min. residence time, 1.21 MNm$^{-2}$ (175 psi) gauge. Monomer conversion to polymer rate of 35.1% was observed. Devolatilized material exhibited the following performance:

Izod Notched impact,
    23°C.=0.21 m.kg/cm (4.1 ft-lbs./in.) notch.
    −40°C.=0.1 m.kg/cm (2.0 ft-lbs./in.) notch.
Flexural Modulus of Elasticity,
    23°C=1.8 GNm$^{-2}$ (272,430 psi).

Example 5

A solution comprising 4.5 kg (9.919 lbs.) poly (butadiene/styrene) (80/20) rubber, 27.51 kg (60.650 lbs.) methyl methacrylate monomer, 12.36 kg (27.248 lbs.) styrene monomer, 9.97 kg (21.974 lbs.) xylene, 0.09 kg (0.206 lbs.) hindered phenol antioxidant, 5.98 gms peroxide initiator, and 0.0094 gms, organo blue dye was continuously polymerized at 175°C, 30 min, residence time, 1.21 MNm$^{-2}$ (175 psi) gauge. Monomer conversion to polymer rate of 36.3% was observed. During devolatilization, 1.0% stearic acid lubricant was incorporated into the polymer.
    Devolatilized material exhibited the following performance:

Izod Notched Impact,
    23°C.=1.33 m.kg/cm (6.5 ft-lbs./in.) notch.
    0°C.=0.26 m.kg/cm (5.2 ft-lbs./in.) notch.
    −40°C.=0.21 m.kg/cm (4.2 ft-lbs./in.) notch.
Flexural Molulus of Elasticity,
    23°C=1.62 GNm$^{-2}$ (235,320 psi),
DTUL,
    1.8 MNm$^{-2}$ (264 psi)=76°C.
Haze,
    23°C.=8.0
Melt Flow Rate (F)=8.8 g/10 min.

Example 6

A solution comprising 4.9 kg (10.807 lbs.) poly (butadiene/styrene) (80/20) rubber, 27.28 kg (60,150 lbs.) methyl methacrylate monomer, 12.26 kg (27.024 lbs.) styrene monomer, 9.89 kg (21.793 lbs.) xylene, 102.3 gms. hindered phenol antioxidant, 5.93 gms peroxide initiator was continuously polymerized at 165°C, 60 min. residence time, 1.21 MNm$^{-2}$ (175 psi) gauge. Monomer

4

conversion to polymer rate of 37.6% was observed. Devolatilized material exhibited the following performance:

Izod Notched Impact,
23°C.=0.29 m.kg/cm (5.7 ft-lbs./in.) notch.
0°C.=0.20 m.kg/cm (3.9 ft-lbs./in.) notch.
—40°C.=0.10 m.kg/cm (1.9 ft-lbs./in.) notch.
Flexural Modulus of Elasticity,
23°C=1.73 GNm$^{-2}$ (250,980 psi)
DTUL,
1.8 MNm$^{-2}$ (264 psi)=86°C.
Haze,
23°C.=12.4
30°C.=8.9
Melt Flow Rate
(F)=1.5 g/10 min.
(I)=0.5 g/10 min.

Example 7

A solution comprising 4.09 kg (9.006 lbs.) poly (butadiene/styrene) (80/20) rubber, 27.28 kg (60.150 lbs.) methyl methacrylate monomer, 12.26 kg (27.024 lbs.) styrene monomer, 9.89 kg (21.793 lbs.) xylene, 102.3 gms. hindered phenol antioxidant, 5.93 gms peroxide initiator was continuously polymerized at 185°C, 30 min. residence time, 1.21 MNm$^{-2}$ (175 psi) gauge. Monomer conversion to polymer rate of 43.0% was observed. Devolatilized material exhibited the following performance:

Izod Notched Impact,
23°C.=0.20 m.kg/cm (3.9 ft-lbs./in) notch.
0°C.=0.1 m.kg/cm (2.0 ft-lbs./in.) notch.
—40°C.=0.06 m.kg/cm (1.2 ft-lbs./in.) notch.
Flexural Modulus of Elasticity,
23°C=1.74 GNm$^{-2}$ (252,670 psi)
DTUL,
1.8 MNm$^{-2}$ (264 psi)=81°C.
Haze,
23°C.=11.4
Melt Flow Rate
(F)=9.4 g/10 min.
(I)=2.9 G/10 min.

Example 8

A solution comprising 7.68 kg (16.934 lbs.) poly (butadiene/styrene) (80/20) rubber, 31.3 kg (69.006 lbs.) methyl methacrylate monomer 15.42 kg (33.989 lbs.) styrene monomer, 32.1 gms. hindered phenol antioxidant, 4.67 gms peroxide initiator was continuously polymerized at 175°C, 45 min. residence time, 1.21 MNm$^{-2}$ (175 psi) gauge. Monomer conversion to polymer rate of 50.1% was observed. Devolatilized material exhibited the following performance:

Izod Notched Impact,
23°C.=0.29 m.kg/cm (5.8 ft-lbs./in.) notch.
0°C.=0.22 m.kg/cm (4.3 ft-lbs./in.) notch.
—40°C.=0.09 m.kg/cm (1.7 ft-lbs./in.) notch.
Flexural Modulus of Elasticity,
23°C=1.67 GNm$^{-2}$ (242,930 psi),
DTUL,
1.8 MNm$^{-2}$ (264 psi)=85°C.
Haze,
23°C.=15.5
Melt Flow Rate
(F)=1.4 g/10 min.
(I)=0.2 g/10 min.

Example 9

A solution comprising 3.05 kg (6.722 lbs.) poly (butadiene/styrene) (80/20) rubber, 27.94 kg (61.598 lbs.) methyl methacrylate monomer, 13.15 kg (28.989 lbs.) styrene monomer, 10.27 kg (22.646 lbs.) xylene, 0.044 gms. hindered phenol antioxidant, 12.33 gms. n-dodecyl mercaptan, and 6.16 gms peroxide initiator was continuously polymerized at 165°C, 60 min. residence time, 1.21 MNm$^{-2}$ (175 psi) gauge. Monomer conversion to polymer rate of 38.8% was observed. Devolatilized material exhibited the following performance:

Izod Notched Impact,
    23°C=0.15 m.kg/cm (3.0 ft-lbs./in.) notch.
    0°C.=0.08 m.kg/cm (1.6 ft-lbs./in.) notch.
    —40°C.=0.06 m.kg/cm (1.1 ft-lbs./in.) notch.
Flexural Molulus of Elasticity,
    23°C=2.22 GNm$^{-2}$ (321,700 psi)
DTUL,
    1.8 MNm$^{-2}$ (264 psi)=85°C.
Haze,
    23°C.=6.2
    30°C.=5.3
Melt Flow Rate
    (F)=8.5 g/10 min.
    (I)=4.1 g/10 min.

Example 10

A solution comprising 4.5 kg (9.913 lbs.) poly (butadiene/styrene) (80/20) rubber, 34.43 kg (75.914 lbs.) methyl methacrylate monomer, 15.47 kg (34.106 lbs.) styrene monomer, 0.066 gms. hindered phenol antioxidant and 7.49 gms peroxide initiator was continuously polymerized at 180°C, 30 min. residence time, 1.21 MNm$^{-2}$ (175 psi) gauge. Monomer conversion to polymer rate of 49.8% was observed. Devolatilized material exhibited the following performance:

Izod Notched Impact,
    23°C.=0.16 m.kg/cm (3.1 ft-lbs./in.) notch.
    0°C.=0.08 m.kg/cm (1.6 ft-lbs./in.) notch.
    —40°C.=0.05 m.kg/cm (1.0 ft-lbs/in.) notch.
Flexural Modulus of Elasticity,
    23°C=2.19 GNm$^{-2}$ (317,430 psi),
DTUL,
    1.8 MNm$^{-2}$ (264 psi)=82°C.
Haze,
    23°C.=11.6
    38°C.=6.0
Melt Flow Rate
    (F)=4.2 g/10 min.
    (I)=2.6 g/10 min.

Example 11

A solution comprising 4.82 kg (10.630 lbs.) poly (butadiene/styrene) (80/20) rubber, 33.24 kg (73.280 lbs.) methyl methacrylate monomer, 16.37 kg (36.100 lbs.) styrene monomer, 32.1 gms. hindered phenol antioxidant and 1.98 gms peroxide initiator was continuously polymerized at 195°C, 40 min. residence time, 1.02 MNm$^{-2}$ (150 psi) gauge. Monomer conversion to polymer rate of 58.0% was observed. Devolatilized material exhibited the following performance:

Izod Notched Impact,
    23°C.=0.03 m.kg/cm (0.69 ft-lbs./in.) notch.
    —40°C.=0.01 m.kg/cm (0.25 ft-lbs./in.) notch.
Flexural Modulus of Elasticity,
    23°C=2.14 GNm$^{-2}$ (311,000 psi)
DTUL,
    1.8 MNm$^{-2}$ (264 psi)=80°C.
Haze,
    23°C.=28.0
Melt Flow Rate
    (F)=40.4 g/10 min.
    (I)=21.6 g/10 min.

Example 12

A solution comprising 4.03 kg (8.876 lbs.) poly (butadiene/styrene) (80/20) rubber, 26.67 kg (58,806 lbs.) methyl methacrylate monomer, 12.49 kg (27.539 lbs.) styrene monomer, 1.54 kg (3.389 lbs.) ethyl acrylate monomer, 9.61 kg (21.184 lbs.) xylene, 0.206 gms, hindered phenol antioxidant, 38.44 gms. n-dodecyl mercaptan, and 0.009 gms organo blue dye, and 5.77 gms peroxide initiator was continuously polymerized at 175°C, 30 min. residence time, 1206583 Nm$^{-2}$ (175 psi) gauge. Monomer conversion to polymer rate of 38.2% was observed. Devolatilized material exhibited the following performance:

Izod Notched Impact,
    23°C.=0.13 m.kg/cm (2.5 ft-lbs./in.) notch.
    0°C.=0.06 m.kg/cm (1.2 ft-lbs./in.) notch.
    —40°C.=0.05 m.kg/cm (0.9 ft-lbs./in.) notch.
Flexural Modulus of Elasticity,
    23°C=1.78 GNm$^{-2}$ (257,600 psi)
DTUL,
    1.8 MNm$^{-2}$ (264 psi)—78°C.
Haze,
    23°C.=8.0
Melt Flow Rate
    (F)=69 g/10 min.

Example 13

A solution comprising 1.84 kg (4.047 lbs.) poly (butadiene/styrene) (80/20) rubber, 31.49 kg (69.415 lbs.) methyl methacrylate monomer, 14.15 kg (31.187 lbs.) styrene monomer, 11.41 kg (25.150 lbs.) xylene, 0.203 gms. hindered phenol antioxidant, 0.0092 gms organo blue dye, and 6.85 gms peroxide initiator was continuously polymerized at 175°C, 30 min. residence time, 1206583 Nm$^{-2}$ (175 psi) gauge. Monomer conversion to polymer rate of 36.1% was observed. During devolatilization, 1.0% stearic acid lubricant was incorporated into the polymer. Devolatilized material exhibited the following performance:

Izod Notched Impact,
    23°C.=0.08 m.kg/cm (1.6 ft-lbs./in.) notch.
    0°C.=0.05 m.kg/cm (0.9 ft-lbs./in.) notch.
    —40°C.=0.02 m.kg/cm (0.4 ft-lbs./in.) notch.
Flexural Modulus of Elasticity,
    23°C=2.75 GNm$^{-2}$ (398,640 psi)
DTUL,
    1.8 MNm$^{-2}$ (264 psi)=82°C.
Haze,
    23°C=5.2
Melt Flow Rate
    (F)=31.0 g/10 min.

Example 14

A solution comprising 3.2 kg (7.055 lbs.) poly (butadiene/styrene) (80/20) rubber, 28.59 kg (63.032 lbs.) methyl methacrylate monomer, 1.78 kg (3.927 lbs.) ethyl acrylate monomer, 14.16 kg (31.221 lbs.) styrene monomer, 11.13 kg (24.545 lbs.) xylene, 0.221 gms. hindered phenol antioxidant, 44.53 gms. n-dodecyl mercaptan, and 0.010 gms organo blue dye, and 6.68 gms peroxide initiator was continuously polymerized at 175°C, 30 min. residence time, 1.21 MNm$^{-2}$ (175 psi) gauge. Monomer conversion to polymer rate of 37.5% was observed. During devolatilization, 1.0% stearic acid lubricant was incorporated into the polymer. Devolatilized material exhibited the following performance:

Izod Notched Impact,
    23°C.=0.06 m.kg/cm (1.2 ft-lbs./in.) notch.
    0°C.=0.05 m.kg/cm (1.0 ft-lbs./in.) notch.
    —40°C.=0.04 m.kg/cm (0.7 ft-lbs./in.) notch.
Flexural Modulus of Elasticity,
    23°C=2.1 GNm$^{-2}$ (308,120 psi)
DTUL,
    1.8 MNm$^{-2}$ (264 psi)=76°C.
Haze,
    23°C.=5.5
Melt Flow Rate
    (F)=96 g/10 min.

Example 15

A solution comprising 1.63 kg (3.592 lbs) poly (butadiene/styrene) (80/20) rubber, 39.59 kg

7

(87.280 lbs.) methyl methacrylate monomer, 13.2 kg (29.093 lbs.) toluene, 0.02 kg (0.036 lbs) antioxidant stabilizer, and 5.94 gms. peroxide initiator was continuously polymerized at 180°C, 30 minute residence time, 1.2 MNm$^{-2}$ (175 psi) gauge. Monomer conversion to 37% was observed.

Example 16 (comparative)

This example shows the properties of material made in absence of synthetic rubber.

A solution comprising 28.79 kg (63.480 lbs.) methyl methacrylate monomer, 12.94 kg (28.520 lbs.) styrene monomer, 10.43 kg (23.000 lbs.) xylene, and 6.26 gms peroxide initiator was continuously polymerized at 175°C, 30 min. residence time 1.2 MNm$^{-2}$ (175 psi) gauge. Monomer conversion to polymer rate of 41.2% was observed. Devolatilized material exhibited the following performance:

Izod Notched Impact,
    23°C.=0.01 m.kg/cm (0.23 ft-lbs./in.) notch.
    0°C.=0.01 m.kg/cm (0.19 ft-lbs./in.) notch.
    −40°C.=0.01 m.kg/cm (0.12 ft-lbs./in.) notch.
Flexural Modulus of Elasticity,
    23°C=3.3 GNm$^{-2}$ (478,710 psi)
DTUL,
    1.8 MNm$^{-2}$ (264 psi)=89°C.
Haze,
    23°C.=2.2
Melt Flow Rate
    (F)=30.6 g/10 min.

Example 17 (comparative)

This example shows incorporation of synthetic rubber after the polymerization step. The methyl methacrylate/styrene/acrylonitrile (75/20/5) polymer was prepared in accordance with Example 1, except in the absence of predissolved rubber. After polymerization, 80 parts of the MMA/St/AN polymer were blended with 20 parts of polybutadiene rubber, and blended in a devolatilizing extruder, 0.8″ twin screw, at 200—250°C. Sample A had no peroxide initiator, and sample B did have added peroxide initiator.

The material exhibited the following performance:

|  | Sample A | Sample B |
|---|---|---|
| Izod Notched Impact, 23°C. | | |
| (ft.lbs./in. notch) | 0.32 | 0.34 |
| m.kg/cm notch | 0.02 | 0.02 |

Example 18 (comparative)

Example 17 was repeated, except using methyl methacrylate homopolymer instead of the MMA/St/AN interpolymer. The materials exhibited the following performance:

|  | Sample A | Sample B |
|---|---|---|
| Izod Notched Impact, 23°C, | | |
| (ft.lbs/in. notch) | 0.30 | 0.32 |
| m.kg/cm notch | 0.02 | 0.02 |

Examples 17 and 18 demonstrate the advantages of predissolving the synthetic polymer versus introducing the rubber versus adding the rubber "after the polymerizing step".

**Claims**

1. A process for the production of graft polymer comprising continuously introducing a solution of synthetic rubber having sites which can be employed for free radical grafting in monomer containing methyl methacrylate into a reactor and continuously stirring the contents of the reactor while subjecting them to polymerization conditions, characterised in that the process is carried out in a single stage polymerization process in a single reactor in which the temperature is controlled at 161 to 195°C., and, after an average residence from 1 to 90 minutes resultant graft polymer is continuously removed from the reactor.

2. A process as claimed in claim 1 wherein the polymerization conditions also comprise a pressure of 0.689 to 1.21 MNm$^{-2}$ (100 to 175 psi) gauge.

3. A process as claimed in claim 1 or 2 wherein the synthetic rubber comprises polybutadiene, butadiene-styrene copolymer, ethylene-propylene diene copolymer, and/or isoprene polymer or copolymer.

4. A process as claimed in any preceding claim wherein the stirring is effected at a rate of 1000 to 2000 rpm and creates a turbulent mass flow within the reactor.

5. A process as claimed in any preceding claim wherein the stirring creates turbulent mass flow with a Reynold's value above 2100.

6. A process as claimed in any preceding claim wherein the temperature is 165° to 180°C.

7. A process as claimed in any preceding claim wherein the solution also contains non-reactive solvent.

8. A process as claimed in claim 7 wherein the solvent comprises up to 25% by weight of the solution, and comprises xylene, toluene, and/or benzene.

9. A process as claimed in claim 7 or 8 wherein the product is removed from the reactor when polymerized to 40 to 90% monomer conversion.

10. A process as claimed in any preceding claim wherein the monomer includes up to 40%, based on total weight of monomer, of one or more of the monomers: styrene, acrylonitrile, alpha-methyl styrene, methyl acrylate, ethyl acrylate, and butyl acrylate.

11. A process as claimed in any preceding claim wherein the monomer consists of 1 to 40% by weight styrene and the balance methyl methacrylate.

12. A process as claimed in any preceding claim wherein the synthetic rubber comprises polybutadiene or butadiene-styrene copolymer containing up to 50% by weight styrene units.

13. A process as claimed in any of claims 1 to 6 wherein the polymerization is conducted in the absence of non-reactive solvent, where styrene is present in the monomer, and the product is removed from the reactor when polymerized to 30 to 60% monomer conversion.

14. Graft polymer having a dispersed phase of rubbery polymer and a continuous phase containing methyl methacrylate units, whenever made by a process as claimed in any preceding claim.

15. A composition comprising polystyrene and, as an impact modifier therefor, graft polymer as claimed in claim 14.


**Patentansprüche**

1. Verfahren zur Herstellung eines Pfropfpolymeren durch kontinuierliche Einführung einer Lösung von synthetischem Kautschuk mit Stellen, die für ein über freie Radikale ablaufendes Pfropfen verwendet werden können, in einem Monomeren, das Methylmethacrylat enthält, in einen Reaktor und kontinuierliches Rühren des Reaktorinhalts, während dieser Polymerisationsbedingungen unterzogen wird, dadurch gekennzeichnet, daß das Verfahren nach Einstufen-Polymerisationsverfahren in einem einzigen Reaktor durchgeführt wird, wobei die Temperatur auf 161 bis 195°C eingestellt wird und nach einer durchschnittlichen Verweilzeit von 1 bis 90 Minuten das erhaltene Pfropfenpolymere kontinuierlich aus dem Reaktor entfernt wird.

2. Verfahren nach Anspruch 1, dadurch gekennzeichnet, daß die Polymerisationsbedingungen auch einen Druck von 0,689 bis 1,21 MNm$^{-2}$ (100 bis 175 psi) vorsehen.

3. Verfahren nach Anspruch 1 oder 2, dadurch gekennzeichnet, daß der eingesetzte synthetische Kautschuk aus Polybutadien, einem Butadien/Styrol-Copolymeren, einem Ethylen/Propylen/Dien-Coplymeren, und/oder einem Isoprenpolymeren oder -copolymeren besteht.

4. Verfahren nach einem der vorhergehenden Ansprüche, dadurch gekennzeichnet, daß das Rühren mit einer Geschwindigkeit von 1000 bis 2000 upm durchgeführt wird und einen turbulenten Massenfluß innerhalb des Reaktors bewirkt.

5. Verfahren nach einem der vorhergehenden Ansprüche, dadurch gekennzeichnet, daß das Rühren einen turbulenten Massenfluß mit einer Reynold's-Zahl von mehr als 2100 bewirkt.

6. Verfahren nach einem der vorhergehenden Ansprüche, dadurch gekennzeichnet, daß eine Temperatur von 165 bis 180°C eingehalten wird.

7. Verfahren nach einem der vorhergehenden Ansprüche, dadurch gekennzeichnet, daß die eingesetzte Lösung auch ein nicht-reaktives Lösungsmittel enthält.

8. Verfahren nach Anspruch 7, dadurch gekennzeichnet, daß das eingesetzte Lösungsmittel bis zu 25 Gew.-% der Lösung ausmacht und aus Xylol, Toluol und/oder Benzol besteht.

9. Verfahren nach Anspruch 7 oder 8, dadurch gekennzeichnet, daß das Produkt aus dem Reaktor entfernt wird, wenn ein 40 bis 90 %iger Monomerumsatz stattgefunden hat.

10. Verfahren nach einem der vorhergehenden Ansprüche, dadurch gekennzeichnet, daß das eingesetzte Monomer bis zu 40%, bezogen auf das Gesamtgewicht des Monomeren, eines oder mehrerer der folgenden Monomeren enthält: Styrol, Acrylnitril, Alphamethylstyrol, Methylacrylat, Ethylacrylat sowie Butylacrylat.

11. Verfahren nach einem der vorhergehenden Ansprüche, dadurch gekennzeichnet, daß das eingesetzte Monomere aus 1 bis 40 Gew.-% Styrol und zum Rest aus Methylmethacrylat besteht.

12. Verfahren nach einem der vorhergehenden Ansprüche, dadurch gekennzeichnet, daß der eingesetzte synthetische Kautschuk aus Polybutadien oder einem Butadien/Styrolcopolymeren, das bis zu 50 Gew.% Styroleinheiten enthält, besteht.

13. Verfahren nach einem der Ansprüche 1 bis 6, dadurch gekennzeichnet, daß die Polymerisation in Abwesenheit von nicht-reaktiven Lösungsmittel durchgeführt wird, wenn Styrol in den Monomeren vorliegt, und das Produkt aus dem Reaktor entfernt wird, wenn es bis zu einem Monomerumsatz von 30 bis 60% polymerisiert worden ist.

14. Pfropfpolymeres mit einer dispergierten Phase aus einem kautschukartigen Polymeren und einer kontinuierlichen Phase, die Methylmethacrylateinheiten enthält, dadurch gekennzeichent, daß es nach einem Verfahren gemäß nach einem der vorhergehenden Ansprüche gestellt worden ist.

15. Masse aus Polystyrol und einem Schlagfestigkeitsmodifizierungsmittel dafür, wobei das Pfropfpolymere Anspruch 14 entspricht.

**Revendications**

1. Procédé pour la production d'un polymère greffé comprenant l'introduction en continu d'une solution de caoutchouc synthétique ayant des sites que l'on peut utiliser dans le greffage radicalaire, dans un monomère contenant du méthacylate de méthyle dans un réacteur et l'agitation continue du contenu du réacteur en le soumettant à des conditions de polymérisation, caractérisé en ce que le procédé est réalisé selon un procédé de polymérisation en un seul stade dans un seul réacteur et en ce que l'on adjuste la température de 161 à 195°C, et après une durée moyenne de séjour de 1 à 90 minutes, on évacue en continu le polymère greffé obtenu du réacteur.

2. Procédé selon la revendication 1, dans lequel les conditions de polymérisation comprennent également une pression manométrique de 0,689 à 1,21 MNm$^{-2}$ (100 à 175 psi).

3. Procédé selon la revendication 1 ou 2, dans lequel le caoutchouc synthétique comprend du polybutadiène, un copolymère de butadiène et de styrène, un copolymère d'éthylène, de propylène et de diène et/ou un polymère ou un copolymère d'isoprène.

4. Procédé selon l'une quelconque des revendication précédentes, dans lequel l'agitation est effectuée à une vitesse de 1 000 à 2 000 tr/mn et crée un débit massique turbulent dans le réacteur.

5. Procédé selon l'une quelconque des revendications précédentes, dans lequel l'agitation crée un débit massique turbulent avec un nombre de Reynolds supérieur à 2 100.

6. Procédé selon l'une quelconque des revendications précédentes, dans lequel la température est de 165 à 180°C.

7. Procédé selon l'une quelconque des revendications précédentes, dans lequel la solution contient également un solvant inerte.

8. Procédé selon la revendication 7, dans lequel le solvant constitue jusqu'à 25% du poids de la solution et comprend du xylène, du toluène et/ou du benzène.

9. Procédé selon la revendication 7 ou 8, dans lequel le produit est évacué du réacteur lorsqu'il est polymérisé avec une conversion du monomère de 40 à 90%.

10. Procédé selon l'une quelconque des revendications précédentes dans lequel le monomère comprend jusqu'à 40%, par rapport au poids total de monomère, d'un ou plusieurs des monomères suivants: styrène, acrylonitrile, $\alpha$-méthylstyrène, acrylate de méthyle, acrylate d'éthyle et acrylate de butyle.

11. Procédé selon l'une quelconque des revendications précédentes dans lequel le monomère est constitué de 1 à 40% en poids de styrène, le reste étant du méthacrylate de méthyle.

12. Procédé selon l'une quelconque des revendications précédentes, dans lequel le caoutchouc synthétique comprend du polybutadiène ou un copolymère de butadiène et de styrène contenant jusqu'à 50% en poids de motifs de styrène.

13. Procédé selon l'une quelconque des revendications 1 à 6, dans lequel on effectue lu polymérisation en l'absence de solvant inerte, où le styrène est présent dans le monomère et le produit est évacué du réacteur lorsqu'il est polymérisé avec une conversion du monomère de 30 à 60%.

14. Polymère greffé ayant une phase dispersée de polymère caoutchouteux et une phase continue contenant des motifs de méthacrylate de méthyle, qui a été préparé selon un procédé comme revendiqué dans l'une quelconque des revendications précédentes.

15. Composition comprenant du polystyrène et, comme agent modificateur de résistance au choc de celui-ci un polymère greffé selon la revendication 14.